# FASCICULE DE BREVET EUROPEEN

(11) **EP 0 406 067 B1**
(45) Date de publication et mention de la délivrance du brevet: **02.06.1993**
(21) Numéro de dépôt: 90401748.0
(22) Date de dépôt: 21.06.1990
(51) Int. Cl.: B29B 15/12, B29B 11/16, B29B 15/10

(54) **Matériau composite à caractéristiques modulables par préimprégnation d'une fibre continue**
Verbundwerkstoff mit durch Vorimprägnierung einer endlosen Faser veränderbaren Charakteristiken
Composite material with characteristics determinable by pre-impregnating a continuous fibre

(30) Priorité: 22.06.1989 FR 8908312
(43) Date de publication de la demande: 02.01.1991
(73) Titulaire: ETAT-FRANCAIS représenté par le DELEGUE GENERAL POUR L'ARMEMENT (DPAG), F-00460 Paris Armées (FR); ELF ATOCHEM S.A., 92800 Puteaux (FR)
(72) Inventeur: Leone, Michel, F-83260 La Crau (FR); Carbone, Robert, F-83390 La Garde (FR); Ganga, Roland, F-94340 Joinville Le Pont (FR)

(56) Documents cités:
- EP-A- 0 222 399
- EP-A- 0 303 499
- WO-A-85/05071
- FR-A- 133 825
- FR-A- 2 548 084
- FR-A- 2 566 324
- FR-A- 2 600 585
- US-A- 3 429 955
- US-A- 3 726 755

## Description

La présente invention concerne un nouveau matériau composite dont les caractéristiques sont modulables et qui est obtenu par préimprégnation d'une fibre continue.

Il est connu par EP-0-133 825 un matériau composite souple selon le préambule de la revendication 1 et qui est constitué d'une gaine souple recouvrant une mèche de fibres imprégnées à coeur de poudre fine de matière plastique dont le point de fusion est supérieur ou égal à celui de la matière dont est réalisée ladite gaine, de façon qu'après réalisation du semi-produit on obtient un matériau qui peut être plié et même noué sans casser, et susceptible de se prêter à des opérations de tressage, tissage et même tricotage.

Toutefois et quelle que soit la nature de la poudre utilisée, il n'est pas possible de modifier au-delà de certaines limites toutes les caractéristiques physiques de matériau composite. De ce fait, les applications possibles dudit matériau composite restent limitées et ne peuvent pas, par exemple, être étendue aux domaines radioélectriques.

Dans le brevet FR-A-2 566 324, il est décrit un matériau préimprégné qui est constitué par une gaine externe métallique ou plastique et une âme, disposée dans ladite gaine, et comportant des mèches dans lesquelles, après ouverture, sont dispersées des poudres métalliques. Il est à noter que la gaine externe, lorsqu'elle est constituée par un polymère, est éliminée par calcination avant fusion de la matrice métallique.

Dans ces conditions, le produit final susceptible d'être utilisé industriellement se trouve dans un état où les mèches ne sont pas ou peu liées entre elles ; on obtient alors un produit métallique dont les caractéristiques physiques sont comparables à des plaques et/ou tuyaux métalliques.

La présente invention a pour objet de proposer un nouveau matériau composite comportant au moins une gaine externe souple continue, des fibres continues disposées dans la gaine externe, de charges spécifiques accompagnées de particules organiques, se présentant sous la forme d'un fil souple continu dans lequel tous les éléments présents sont non liés entre eux, de manière à pouvoir réaliser des semi-produits sous forme de ruban, nappe et manchon, dont la structure peut être unidirectionnelle, tissée, tricotée ou multidirectionnelle.

En faisant varier la nature et/ou les proportions des divers constituants du matériau composite selon l'invention, on peut non seulement faire varier les propriétés physiques suivant chaque direction de la structure du semi-produit, mais également moduler les caractéristiques spécifiques du produit final obtenu à partir de semi-produit, de manière à les adapter de façon optimale en fonction de l'application envisagée.

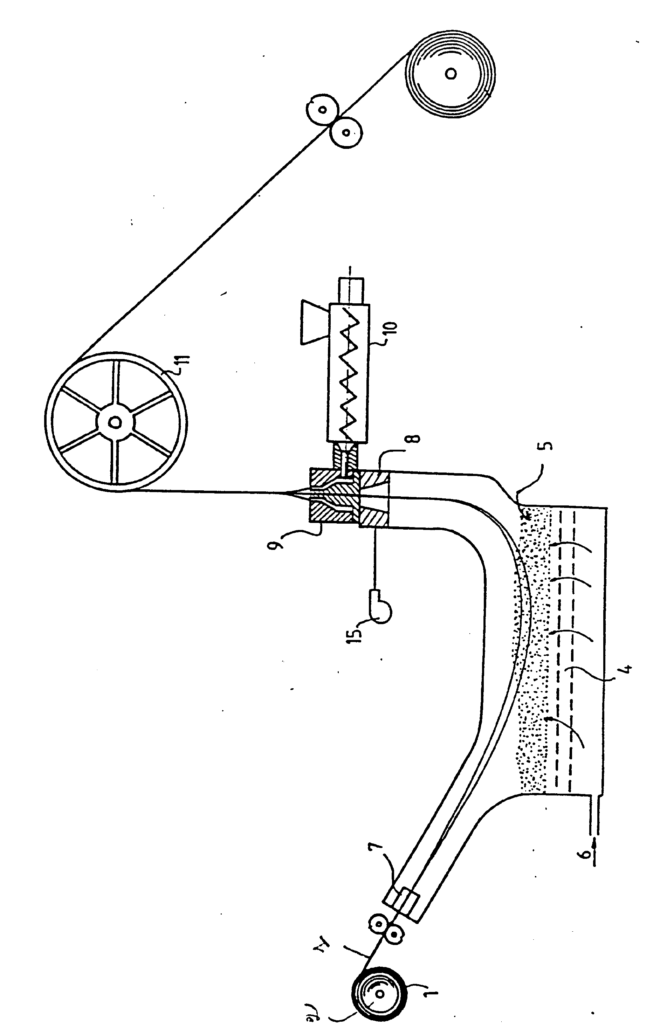

D'autres caractéristiques et avantages apparaîtront à la lecture de la description du composite suivant l'invention, ainsi que du dessin annexé sur lequel la figure unique est une vue en élévation et en coupe d'un dispositif de mise en oeuvre d'un procédé de réalisation d'un fil souple.

Le matériau composite selon l'invention qui se présente, de préférence, sous la forme d'un fil souple obtenu, par exemple par la technique décrite dans le brevet EP-0-133 825, comprend :
- des fibres continues minérales, organiques ou métalliques se présentant sous forme de multifilaments continus constituant des mèches de différents grammages,
- une poudre transformable par élévation de température pour former une matrice avec la gaine, constituée de polymère adéquat, de type thermoplastique ou thermodurcissable,
- des charges spécifiques pleines, creuses ou poreuses qui peuvent être constituées par des poudres, billes, lamelles, paillettes ou fibrilles, lesdites charges étant minérales, organiques ou métalliques et susceptibles de présenter des propriétés isolantes, conductrices et/ou magnétiques,
- et une gaine externe qui, dans la majorité des cas, est du type thermoplastique obtenue, par extrusion de polymère, mais qui peut être de nature différente et obtenue, par exemple, par un guipage ou passage dans une solution et élimination du solvant.

Les caractéristiques de chacun des constituants du fil souple, telles que résistance chimique, mécanique, diélectrique sont choisies en fonction des propriétés que l'on désire conférer au produit final à réaliser.

Un procédé de réalisation du fil souple consiste à :
- ouvrir les mèches de fibres continues par passage sur rouleaux ou soufflage de filet d'air,
- faire pénétrer la poudre avec les charges spécifiques dans lesdites mèches ouvertes,
- puis à gainer les fibres, la poudre et les charges qui sont non liées, au moyen d'une gaine externe continue.

La proportion en volume entre les fibres des mèches et le mélange de poudre et charges est, de préférence, compris entre 40 et 70 %, et le rapport en poids entre la gaine et les autres constituants du fil est compris entre 15 et 25 % .

Il faut noter que la gaine externe n'est pas également liée aux fibres et/ou poudre et charges, de manière à conserver au fil une grande souplesse.

Un procédé de réalisation du fil souple, à partir des constituants indiqués ci-dessus, peut être le suivant :

Dans une première étape, on réalise un mélange de poudre et de charges, soit par enrobage de la charge par la poudre, soit par adjonction par le système dit "Dry Blend" des grains de charges autour des grains de poudre ou inversement. Le rapport volumique dans le mélange entre les charges et la poudre est compris entre 90 et 0 % .

La granulométrie de poudre de polymère et des charges spécifiques est choisie de façon que le mélange poudre/charge puisse pénétrer les filaments des fibres continues. De préférence, la granulométrie de la poudre est comprise entre 10 et 60µ alors que celle des charges est comprise entre 0,2 et 100µ.

Une mèche continue de fibres (1) est déroulée d'un dévidoir (2) sous la traction engendrée par une paire de cylindres d'appel (3). La mêche (1) pénètre par un sas étanche (7) dans une cuve de fluidisation entièrement fermée (4) où sous l'action d'air comprimé (6) admis dans le caisson inférieur, le mélange (5) est mise en état de fluidisation. La mêche (1) est épanouie ou défibrée par des moyens connus non représentés, au moyen de galets ou cylindres cannelés. La mèche se charge électrostatiquement par frottement sur ces organes puis, garnie de mélange, elle s'évacue de la cuve de fluidisation à travers un second sas étanche (8).

Le sas (8) présente la particularité d'être monté à la fois sur la cuve de fluidisation et sur une tête d'équerre de recouvrement (9) par l'intermédiaire de deux joints thermiques, non représentés, qui réduisent au maximum les échanges thermiques entre le sas (8) et d'une part la tête d'équerre de recouvrement (9), qui est une source de génération de chaleur du fait de son chauffage positif (non représenté) et d'autre part l'extrémité de la cuve de fluidisation (4). L'isolation thermique sert à éviter la gélification du mélange au contact des surfaces chaudes sur lesquelles il pourrait fondre.

L'étanchéité des raccordements cuve de fluidisation 4/sas 8/tête d'équerre (9) est destinée à éviter que les particules de poudre et/ou de charges ne s'échappent à l'extérieur de l'installation et ne provoquent des accidents par inflammation.

Pour compléter l'action de refoulement vers la cuve de toute particule du mélange non fixée par charge électrostatique sur la mêche, un léger courant d'air est généré dans le sas (8) par une pompe à faible débit (15). Cette pompe est du type pompes à galets de laboratoire, commercialisée par les Ets.
W. BACHOFEN à Bâle. Les pressions d'air que ces pompes sont capables de fournir sont comprises dans la fourchette de 0,10 à 0,30 bar et leur débit peut être rendu aussi faible que possible pour la génération d'un courant dit "bulle à bulle" par réduction de la vitesse de rotation du rotor à galets dont elles sont équipées et qui produit le déplacement de l'air dans un conduit souple écrasé par ledit rotor à galets.

Des petits cyclones, non représentés pour ne pas charger la figure, permettent de laisser s'échapper l'excès d'air introduit par la pompe (15) et de récupérer les petites quantités de mélange entraîné.

A la sortie du sas (8), la mêche garnie de mélange pénètre dans la tête (9).

La tête d'équerre (9) est approvisionnée en matière plastique de gaînage par l'extrudeuse (10) représentée par son corps de jonction avec la tête. La matière plastique de gainage sort de la tête sous une forme dite "en tubant", c'est-à-dire que le diamètre de sortie de la gaîne plastique est défini par un poinçon de diamètre plus fort que le diamètre extérieur de la mèche, et que la gaîne de matière fondue se rétrécit du fait de la traction sur le profilé émergeant de la filière et vient au contact de la mêche après un parcours dans l'air de 5 mm environ.

Cette tête de recouvrement est avantageusement disposée suivant un axe vertical. Le profilé est pratiquement froid après un parcours dans l'air d'un mètre environ. Il reste souple et passe sur une poulie à gorge (11) d'un diamètre de 600 mm environ.

Dans le cas de fortes densités du mélange, il est préférable d'utiliser un système descendant au lieu d'être montant comme c'est le cas du système représenté sur la figure.

Au cours de la fabrication du fil souple préimprégné, on peut modifier les caractéristiques sur sa longueur, en changeant la nature et la granulométrie du mélange introduit dans la mèche ouverte.

Le fil souple ainsi obtenu à caractéristiques constantes ou variables sur sa longueur sert à réaliser des semi-produits sous la forme de structures unidirectionnelles tissées ou tricotées, ou de structures multidirectionnelles. Les caractéristiques des semi-produits peuvent être modulées en juxtaposant des fils de natures différentes. De cette façon, on crée un semi-produit ou produit intermédiaire à motifs variables sur la longueur, la surface ou l'épaisseur.

Un autre exemple du fil souple consiste à utiliser un mélange dans lequel les charges sont prédominantes et dont la gaine externe est recouverte d'une résine de préimprégnation appropriée et compatible avec le matériau utilisé pour ladite gaine. Les structures unidirectionnelles, tissées, tricotées ou multidirectionnelles obtenues avec un tel fil, sont ensuite imprégnées au moyen d'une résine.

Un autre exemple de fil souple plus complexe consiste à utiliser, d'une part, une première gaine renfermant les fibres continues, une poudre ou un mélange poudre-charges, et d'autre part, une deuxième gaine analogue ou différente de la première gaine, l'espace ménagé entre les deux gaines étant rempli par des charges seules, une poudre seule ou un deuxième mélange poudre-charges, la nature et/ou la proportion des éléments du deuxième mélange pouvant être identiques ou différentes de celles du premier mélange.

Bien entendu, en peut réaliser un fil préimprégné à plus de deux gaines, les constituants disposés entre les gaines successives étant choisis en fonction du résultat à atteindre.

La transformation du semi-produit est effectuée par mise en fusion et/ou réticulation du mélange/gaine qui lie alors les fibres au mélange pour constituer un produit final composite. Généralement, on préfère effectuer la transformation par l'action combinée de la température et de la pression qui dépendent des matériaux utilisés.

Les caractéristiques propres aux matériaux telles que viscosité, cristallinité, longueur de chaîne, temps de fusion et de refroidissement ou de réticulation, sont un facteur important de réalisation d'un bon composite.

Les procédés connus tels que l'enroulement filamentaire, la pultrusion ou le pressage, en autoclave avec projection de fibres coupées peuvent également être utilisés.

Les domaines d'application du composite suivant l'invention sont ceux des matériaux composites : structures, plaques pour circuits imprimés, fenêtres électromagnétiques, absorbants dans le domaine acoustique, électromagnétique.

Les fibres sont réalisées notamment à partir de fibres de verre E, R ou S, d'aramide, de silice, de polymères, ou de carbone.

La poudre est obtenue à partir de polymères diélectriques, thermoplastiques, thermodurcissables, thermostables, ou absorbants tels que des polymères conducteurs ou chiraux.

Les charges sont par exemple des billes pleines ou creuses de silice, graphite, etc..., ou sous forme de lamelles ou de paillettes de minéraux ou de métaux présentant des caractéristiques diélectriques recherchées.

Les gaines sont obtenues notamment à partir de polymères thermoplastiques ou de métaux ductiles sous forme de film ou de fil.

Pour la réalisation d'une fenêtre électromagnétique, on a confectionné un fil souple comprenant :
- une mèche (roving) de fibre de verre E de 320 tex, commercialisé par Owens Corning Fiberglass,
- un mélange qui est constitué par "dry blend" de poudre de polymamide 12 "ORGASOL 2002" Nat, de granulométrie moyenne de 20 microns et de billes de verre creuses E 22/X de granulométrie moyenne 30 microns produites par la société 3M ; la proportion en volume des billes de verre est de 60 % alors que la poudre est de 40 % .
- une gaine en polyamide AMNO commercialisée par ATOCHEM, de densité 1,06 et de melt index 40 (mesuré à 190° sous un poids de 2 kg).

Le fil souple obtenu après passage en bain fluidisé et gainage par extrusion, comprend (en poids) :
- fibres :: 60 %
- mélange :: 23 %
- gaine :: 17 %

Le fil préimprégné ainsi réalisé est disposé en fils unidirectionnels parallèles dans un moule qu'on chauffe à 230°C pendant 3 minutes; puis on le presse à 5 bars pendant 30 secondes et on refroidit sous presse pendant 10 minutes. On obtient ainsi un barreau présentant, à l'analyse, une permitivité diélectrique et un angle de perte (Egδ) faibles.

## Revendications

1. Matériau composite souple constitué d'une gaine et d'une âme comportant des fibres continues, et une poudre transformable par élévation de température pour former une matrice avec la gaine, caractérisé en ce qu'il comprend en outre une charge dont la température de fusion est supérieure à, au moins la température de fusion la plus élevée des autres constituants du matériau.

2. Matériau selon la revendication 1, caractérisé en ce que la nature de la charge est différente de la nature de la poudre.

3. Matériau selon la revendication 1 ou 2, caractérisé en ce que les charges sont organiques, minérales ou métalliques.

4. Matériau selon l'une des revendications 1 à 3, caractérisé en ce que les charges sont pleines, creuses ou poreuses.

5. Matériau selon l'une des revendications 1 à 4, caractérisé en ce que les charges sont isolantes, conductrices ou magnétiques.

6. Matériau selon l'une des revendications 1 à 5, caractérisé en ce que le rapport volumique entre les charges et la poudre est compris entre 90 à 0 % .

7. Matériau selon l'une des revendications précédentes, caractérisé en ce que la granulométrie des charges est comprise entre 0,2 et 100 microns et de préférence entre 10 et 60 microns.

8. Matériau selon l'une des revendications précédentes, caractérisé en ce que la charge est une bille creuse.

9. Matériau selon la revendication 8, caractérisé en ce que la bille creuse est en silice ou graphite.

10. Matériau selon la revendication 1, caractérisé en ce que la poudre est choisie parmi les polymères diélectriques.

11. Matériau selon la revendication 1, caractérisé en ce que la poudre est choisie parmi les polymères absorbants.

12. Matériau selon l'une des revendications 10 ou 11, caracérisé en ce que la granulométrie de la poudre est comprise entre 10 et 60 microns.

13. Matériau selon la revendication 1, caractérisé en ce que les fibres continues sont des fibres de verre, de carbone, d'aramide ou de matériaux polymériques.

14. Matériau selon la revendication 1, caractérisé en ce que les fibres continues sont métalliques.

15. Matériau selon la revendication 1, caractérisé en ce que les fibres sont des fibres diélectriques.

16. Matériau selon la revendication 1, caractérisé en ce que la proportion en volume entre les fibres et un mélange constitué par la poudre et la charge est comprise entre 70 et 5 % et de préférence entre 70 et 30 % .

17. Matériau selon la revendication 1, caractérisé en ce que la gaine est un polymère thermoplastique.

18. Matériau selon la revendication 1, caractérisé en ce que la gaine est réalisée à partir d'un métal ductile.

19. Matériau selon la revendication 18, caractérisé en ce que le rapport en poids entre la gaine et le reste du matériau est compris entre 5 et 70 % de de préférence entre 5 et 20 % .

20. Produit obtenu suivant le matériau des revendications 1 à 19, caractérisé en ce qu'il présente des caractéristiques radioélectriques.

## Patentansprüche

1. Biegsamer Verbundwerkstoff, bestehend aus einer Hülle und einem Kern, der aus durchgehenden Fasern und einem durch Temperaturerhöhung umwandelbaren Pulver besteht, das unter Wärmeeinwirkung zusammen mit der Hülle eine Matrize bildet, dadurch gekennzeichnet, daß er außerdem ein Verstärkungsmaterial enthält, dessen Schmelztemperatur höher liegt als die höchste Schmelztemperatur der übrigen Bestandteile des Werkstoffes.

2. Werkstoff gemäß Patentanspruch 1, dadurch gekennzeichnet, daß das Verstärkungsmaterial und das Pulver nicht von derselben Art sind.

3. Werkstoff gemäß Patentanspruch 1 oder 2, dadurch gekennzeichnet, daß das Verstärkungsmaterial organisch, mineralisch oder metallisch ist.

4. Werkstoff gemäß einem der Patentansprüche von 1 bis 3, dadurch gekennzeichnet, daß das Verstärkungsmaterial voll, hohl oder porös ist.

5. Werkstoff gemäß einem der Patentansprüche von 1 bis 4, dadurch gekennzeichnet, daß das Verstärkungsmaterial isolierend, leitend oder magnetisch ist.

6. Werkstoff gemäß einem der Patentansprüche von 1 bis 5, dadurch gekennzeichnet, daß das Raumverhältnis zwischen Verstärkungsmaterial und Pulver zwischen 90 und 0 % liegt.

7. Werkstoff gemäß einem der vorhergehenden Patentansprüche, dadurch gekennzeichnet, daß die Granulometrie des Verstärkungsmittels zwischen 0,2 und 100 Mikron liegt, und zwar vorzugsweise zwischen 10 und 60 Mikron.

8. Werkstoff gemäß einem der vorhergehenden Patentansprüche, dadurch gekennzeichnet, daß das Verstärkungsmaterial eine hohle Kugel ist.

9. Werkstoff gemäß Patentanspruch 8, dadurch gekennzeichnet, daß die hohle Kugel aus Kieselerde oder Graphit besteht.

10. Werkstoff gemäß Patentanspruch 1, dadurch gekennzeichnet, daß das ausgewählte Pulver zu den dielektrischen Polymeren gehört.

11. Werkstoff gemäß Patentanspruch 1, dadurch gekennzeichnet, daß als Pulver ein absorbierendes Polymer gewählt wird.

12. Werkstoff gemäß Patentanspruch 10 oder 11, dadurch gekennzeichnet, daß die Granulometrie des Pulvers zwischen 10 und 60 Mikron liegt.

13. Werkstoff gemäß Patentanspruch 1, dadurch gekennzeichnet, daß die durchgehenden Fasern aus Glasfaser, Kohlenstoff, Aramid oder Polymerstoffen bestehen.

14. Werkstoff gemäß Patentanspruch 1, dadurch gekennzeichnet, daß die durchgehenden Fasern aus Metall sind.

15. Werkstoff gemäß Patentanspruch 1, dadurch gekennzeichnet, daß es sich bei den Fasern um dielektrische Fasern handelt.

16. Werkstoff gemäß Patentanspruch 1, dadurch gekennzeichnet, daß das Raumverhältnis zwischen den Fasern und einer Mischung aus Pulver und Verstärkungsmaterial zwischen 70 und 5 % liegt, und zwar vorzugsweise zwischen 70 und 30 %.

17. Werkstoff gemäß Patentanspruch 1, dadurch gekennzeichnet, daß die Hülle aus einem thermoplastischen Polymer besteht.

18. Werkstoff gemäß Patentanspruch 1, dadurch gekennzeichnet, daß die Hülle aus einem duktilen Metall hergestellt ist.

19. Werkstoff gemäß Patentanspruch 18, dadurch gekennzeichnet, daß das Gewichtsverhältnis zwischen der Hülle und dem restlichen Material zwischen 5 und 70 % liegt, und zwar vorzugsweise zwischen 5 und 20 %.

20. Produkt, das aus dem Werkstoff der Patentansprüche 1 bis 19 hergestellt ist, dadurch gekennzeichnet, daß es radioelektrische Eigenschaften besitzt.

## Claims

1. A flexible composite material comprised of a sheath and a core consisting of continuous fibers, a powder which is transformable by a rise of temperature to form links with the sheath, characterized in that it also comprises a filler the melting temperature of which is higher than at least the highest melting temperature of the other components of the material..

2. A material as claimed in claim 1, characterized in that the nature of the filler is different from the nature of the powder

3. A material as claimed in claims 1 or 2 characterized in that the fillers are organic, mineral or metallic fillers.

4. A material as claimed in any of claims 1 to 3, characterized in that the fillers are solid, hollow or porous fillers.

5. A material as claimed in any of claims 1 to 4, characterized in that the fillers are insulating, conducting or magnetic fillers.

6. A material as claimed in any of claims 1 to 5, characterized in that the ratio by volume of the fillers to the powder is in the 90 to 0% range.

7. A material as claimed in any of preceding claims, characterized in that the grain structure of the fillers is in the 0.2 to 100 micron range and preferably in the 10 to 60 micron range.

8. A material as claimed in any of preceding claims characterized in that the filler is a hollow ball.

9. A material as claimed in claim 8, characterized in that the hollow ball is made of silica or graphite.

10. A material as claimed in claim 1, characterized in that the powder is selected among dielectric polymers

11. A material as claimed in claim, characterized in that the powder is selected among absorbing polymers.

12. A material as claimed in any of claims 10 or 11, characterized in that the grain structure of the powder is in the 10 to 60 micron range

13. A material as claimed in claim 1, characterized in that the continuous fibers are glass, carbon, aramide or polymeric material fibers.

14. A material as claimed in claim 1, characterized in that the continuous fibers are metallic fibers.

15. A material as claimed in claim 1, characterized in that the fibers are dielectric fibers.

16. A material as claimed in claim 1, characterized in that the ratio by volume of the fibers to a mixture consisting of the powder and the filler is in the 70 to 5% range, and preferably in the 70 to 30% range.

17. A material as claimed in claim 1, characterized in that the sheath is a thermoplastic polymer.

18. A material as claimed in claim 1, characterized in that the sheath is made from a ductile metal.

19. A material as claimed in claim 18, characterized in that the ration by weight of the sheath to the remainder of the material is in the 5 to 70% range and preferably in the 5 to 20% range.

20. A product obtained from the material of claim 1 to 19, characterized in that it has radioelectric characteristics.
